# EUROPEAN PATENT SPECIFICATION

(11) **EP 2 139 757 B1**
(45) Date of publication and mention of the grant of the patent: **16.11.2011**
(21) Application number: 07747408.8
(22) Date of filing: 26.04.2007
(51) Int. Cl.: B63H 5/125, B63H 20/08, B63H 21/17

(54) **VESSEL WITH RETRACTABLE MOTOR/GENERATOR ASSEMBLY**
SCHIFF MIT EINZIEHBARER MOTOR/GENERATOR-ANORDNUNG
NAVIRE AVEC ENSEMBLE MOTEUR-GÉNÉRATEUR RÉTRACTABLE

(43) Date of publication of application: 06.01.2010
(73) Proprietor: Goudsmit, Gideon Raphael, 1188 WC Amstelveen (NL)
(72) Inventor: Goudsmit, Gideon Raphael, 1188 WC Amstelveen (NL)
(74) Representative: Ketelaars, Maarten F.J.M.
(86) International application number: PCT/NL2007/050184
(87) International publication number: WO 2008/133494

(56) References cited:
- EP-A- 1 491 439
- NL-C1- 1 020 217
- US-A1- 2006 228 956
- US-A1- 2006 240 723

## Description

### Field of the invention

The present invention relates to a vessel, e.g, a sailing vessel, comprising a motor/generator assembly, the motor/generator assembly comprising a drive unit and a propeller attached to the drive unit for providing propulsion to the vessel or for generating electric power.

### Prior art

Dutch patent NL1020217 describes an electric propulsion and generator unit for sailing ships. A lifting arrangement is disclosed, which is positioned in a steering column of the ship, and which lifts a motor and propeller arrangement in and out of the water using a linear upward and downward motion. The arrangement disclosed is complex, and takes up additional space inside the vessel: the electric motor is positioned inside the vessel in both extended mode and retracted mode, and drives a propeller via a transmission and rotating shafts.

American patent publication US2006/0240723 discloses an outboard motor for attachment to a vessel. The motor part is disconnectable from the drive part of the assembly to allow easy mounting and storage of the outboard motor.

American patent publication US2006/0228956 discloses an outboard motor provided with both an internal combustion engine and an electric motor which are used as power sources fro driving a propeller. The battery for the electric motor and the associated control electronics are mounted inside the vessel, in order to protect these from the environment in the vicinity of the engine/motor and propeller.

European patent application EP-A-1 491 439 discloses an outboard engine provided with a forward/backward gear shifting mechanism. A hydraulic mechanism including a hydraulic cylinder is provided to allow the outboard engine as a whole to be tilted around a tilting axis L2.

American patent US 6,802,749 discloses a trolling and battery charging system for a vessel. The system has a fixed construction and can only be positioned on an outer perimeter of the vessel. The system is not retractable, but can only be removed in its entirety. This makes a stowing space on board of the vessel a necessity.

### Summary of the invention

The present invention seeks to provide an improved motor/generator assembly, which allows to provide a very energy efficient vessel.

According to the present invention, a vessel according to claim 1 or claim 2 is provided. When using an attachment arm, it is possible to retract and extend the assembly very efficiently, and also to obtain an efficient position of the drive unit and propeller away from the vessel itself (in a free water flow). In one embodiment, the actuator comprises a swiveling actuator mounted above a water level of the vessel. Swiveling or rotation of the actuator can be implemented very efficiently when space is available above the water line of a vessel, e.g. as is the case with catamarans. Swiveling may be implemented in a sideways direction, but in some circumstances, swiveling to the front or aft of the vessel is also a good possibility. In a further embodiment, the actuator comprises a linear actuator mounted in a hull of the vessel. The linear retraction and extension of the assembly is also very efficient, especially in the case of single hull vessels. By proper positioning of the actuator, further advantages may be obtained, as improved center of gravity, control, etc.

The attachment arm has a streamlined shape in a further embodiment, e.g. in the form of an aerofoil shape. This allows to minimize the drag created by the part of the attachment arm extending in the water (and to a lesser extend also the drag created in air). In an even further embodiment, also the drive unit has a streamlined profile, e.g. the form of the front of a torpedo.

In a specific embodiment, the vessel comprises two hulls, both provided with a motor/generator assembly. Having two assemblies allows a greater operating range (having one or both assemblies working as motor or generator), and also allows to use the drive capability of both assemblies for differential steering purposes. In a further embodiment, the propellers of the two motor/generator assemblies are counter rotating. This minimizes or even eliminates a wheel effect, allowing the rudders to be used to full efficiency (no counter steering is necessary to counteract the wheel effect).

In an even further embodiment of the present invention, the vessel further comprises a motor/generator electronics unit for controlling operation of the drive unit and for converting electric energy, in which the motor/generator electronics unit further comprises a heat exchanger for transporting heat energy from the motor/generator electronics unit to further onboard systems (such as warm water supply). This further enhances the efficiency on board of the vessel, as the heat generated in the electronics unit is used to save energy in other onboard systems.

The motor/generator electronic unit is in an embodiment further arranged to switch to a power generating mode when the electric motor exceeds a preset rotation speed. The preset rotation speed (rpm) may be a minimum rotation speed, below which no electric power can be generated by the drive unit (e.g. 150 rpm). The preset rotation speed may also be higher, e.g. to allow to use the drive unit to propel the vessel, while changing to a power generating mode above a threshold rotation speed, e.g. to make use of wind or water flow which propels the vessel to a higher speed. The motor/generator electronics unit is in an even further embodiment also arranged to be in a propelling mode up to a maximum speed of the electric motor. This allows to use the motor/generator assembly most efficiently, as beyond a certain rpm, additional power input to obtain a higher speed is not efficient (e.g. when needing 30% more electrical power to obtain a speed increase of only 0.2 or 0.5 knots). Usually the maximum rpm setting is related to the maximum hull speed.

### Short description of drawings

The present invention will be discussed in more detail below, using a number of exemplary embodiments, with reference to the attached drawings, in which
Fig. 1 shows a cross sectional view of a part of a vessel according to an embodiment of the present invention;
Fig. 2 shows a cross sectional view in sailing direction of the vessel of Fig. 1;
Fig. 3 shows a detailed side view of a motor/generator assembly as used in the vessel of Fig. 1;
Fig. 4 shows a partial detail view of the attachment of the motor/generator assembly of Fig. 3 to the vessel; and
Fig. 5 shows a simplified diagrammatic view of the elements of a vessel in which the present invention is embodied.

### Detailed description of exemplary embodiments

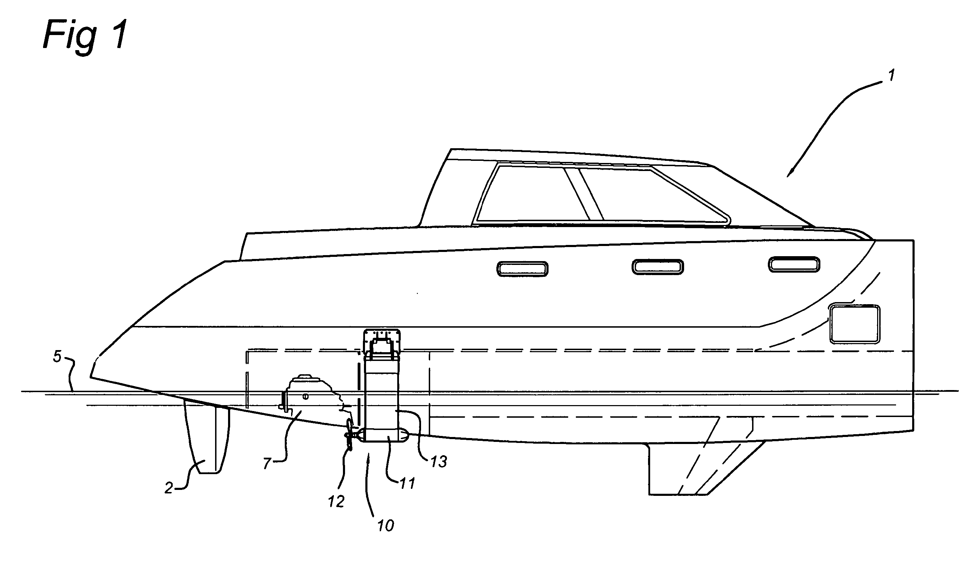

The present invention may be advantageously applied in all sorts of sailing vessels, such as catamarans. In Fig. 1, a cross sectional view is shown of an exemplary implementation in a catamaran 1. A motor/generator assembly 10 is fitted in the rear part of catamaran 1, but in front of the rudder 2. As visible in this view, the motor/generator assembly 10 comprises a drive unit 11, a propeller 12 connected to the drive unit 11, and an attachment arm 13 for extending the drive unit 11 and propeller 12 into the water. This position of the motor/generator assembly 10 ensures that the rudders 2 stay effective, with minimum influence of the water flow which is disturbed by the propeller 12 of the motor/generator unit 10 (no vibrations).

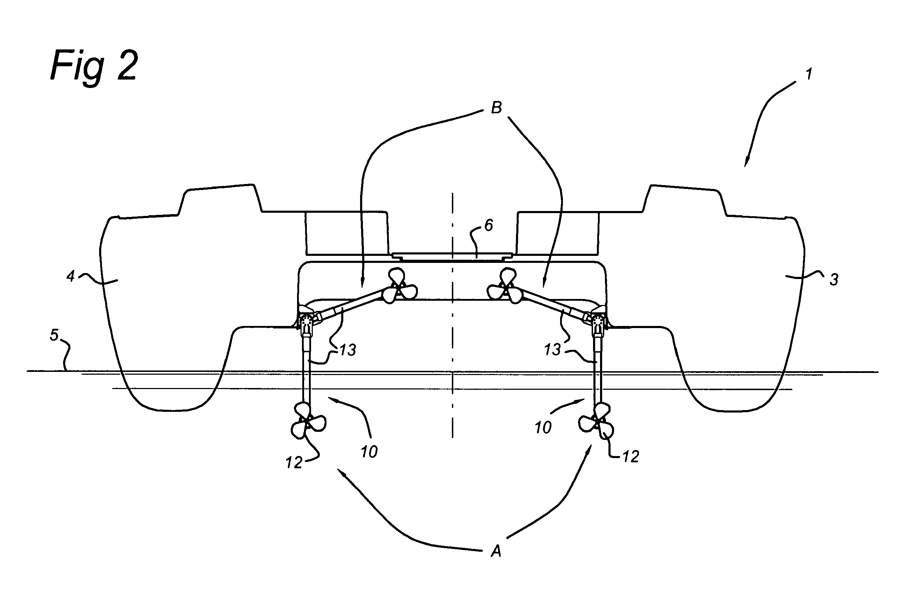

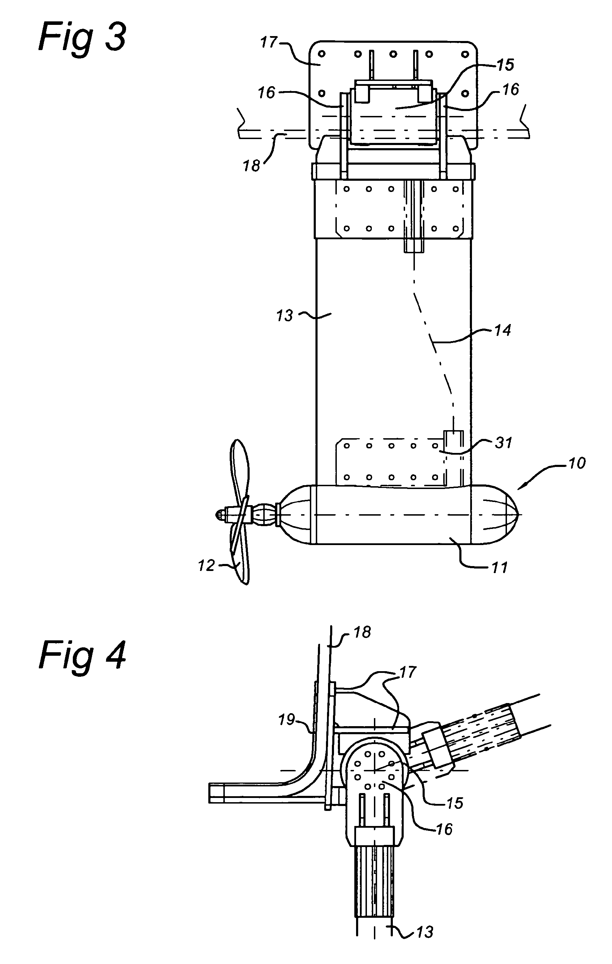

In Fig. 2, a cross sectional view of the catamaran 1 of Fig. 1 is shown in sailing direction, at the position of the attachment of the motor/generator unit 10 to a hull 3, 4 of the catamaran 1. This view clearly shows the two-hull concept of the catamaran 1, having a starboard hull 3 and a port hull 4, connected to each other. When sailing the water line 5 is low at each of the hulls 3, 4, as indicated in Fig. 2. The attachment arm 13 is long enough to allow the drive unit 11 and propeller 12 to be well below the waterline 5, in the extended position as shown with letter A. In the embodiment shown, the propeller 12 is not close to the hull 3, 4, but at a distance of about one meter, allowing the propeller 12 to operate in a virtually undisturbed water flow. The assembly 10 may be rotated out of the water into a retracted position as shown with letter B. In the extended position A, each of the motor/generator assemblies 10 can act either as a propulsion motor (e.g. for entering a harbor), or as electricity generator. The attachment of the motor/generator assembly 10 to one of the hulls 3, 4 will be explained below with reference to the Figs. 3 and 4. By having the two propellers 12 at port and starboard side to counter-rotate, wheel effect is avoided and efficiency is improved as the rudders 2 can then be kept in line instead of counter steering the wheel effect. Furthermore, having two motor/generator assemblies 10 in a single vessel 1 also allows to use differential steering, eliminating the need to make the assemblies 10 steerable. Differential steering is also more effective than using the rudders 2 only.

The retracted position B of a motor/generator assembly 10 may also be obtained by swinging the assembly to the front or aft of a vessel. In some vessels 1 (e.g. narrower catamarans 1, or trimarans) this is easier to implement then sideways retraction. In an even further embodiment (e.g. in the case of single hull vessels 1), the motor/generator assembly 10 may be retracted and extended in a vertical direction, e.g. using a linear actuator 15 or a lifting cylinder.

As the motor/generator assemblies 10 may be retracted from the water when not in use, numerous advantages are created. The resistance while sailing is lowered, and actual sailing speed may increase as no conventional sail drives (usually diesel engine driven), propellers, propeller shafts, shaft supports are in the flow of the water. As a result of the mounting position of the motor/generator assemblies 10, the heavy parts are located close to the centre of gravity of the catamaran 1, which makes the catamaran 1 safer and more comfortable. Furthermore, when the catamaran 1 picks up too much speed (for comfort or safety), the motor/generator assemblies 10 may be lowered in the extended position A to increase resistance (lowering the speed) while at the same time generating electrical power. The retractable nature of the assemblies 10 also allow beaching of the vessel 1 without causing any damage to the drive unit 11 or propellers 12.

A further advantage of the present implementation in which the propellers 12 are lifted from the water, is that no folding or feathering propellers are needed, which are expensive and need regular maintenance. Grounding of the entire catamaran 1 with the present motor/generator assembly 10 is very limited, which will cause propeller anodes (if present) to wear very slowly, if at all. The propellers 12 are of a material which lessens or eliminates corroding of the propeller 12 and repels growth thereon, which allows the propeller 12 to retain its original efficiency without degradation over time. Because of the limited grounding, the chance of lightning strike on the catamaran 1 is less. A further advantage of the present construction of the catamaran 1 with motor/generator assembly 10 is that the drive unit 11 and the propeller 12 are located under the bridge deck between the hulls 3, 4, and therefore noise in the rooms or quarters in the catamaran I can be minimal.

In the deck connecting the hulls 3, 4, a hatch 6 (or two hatches) maybe provided which allow inspection of the drive unit 11 and propeller 12 when in the retracted position B. The hatch 6 also allows quick and easy cleaning of the propeller 12 or drive unit 11, e.g. when fouled with kelp, ropes or fishing nets.

The use of two motor/generator assemblies 10 in a catamaran 1 allows using one or both assemblies 10 either for propulsion or for generating electricity. Also, it is possible to use one of the assemblies 10 as motor or generator, and lift the other assembly 10 from the water, thereby decreasing resistance.

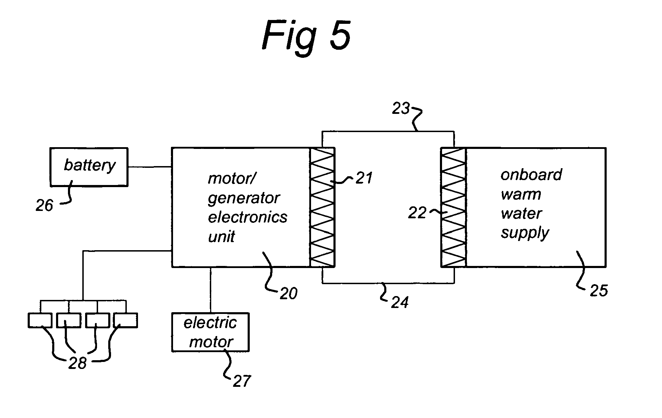

The motor/generator assemblies 10 may be attached to the respective hull 3, 4 above the waterline 5, which prevents any possible locations for leakage of the hull 3, 4. In Fig. 3 a more detailed side view is shown of the motor/generator assembly 10, including the attachment elements for mounting the assembly 10 to the hull 3, 4. Also, this particular view shows more in detail that the drive unit 11 is streamlined (e.g. the combination of drive unit 11 and propeller 12 have a torpedo like shape) which allows to keep the resistance of the assembly 10 in the water as low as possible. The electric motor/generator 27 (see Fig. 5) in the drive unit 11 is in an embodiment of a brushless type (maintenance free). Various power ratings may be provided by the motor 27, depending on the specific type of vessel, and may range from 3 up to 50 kW. The drive unit 11 is built to IP68 standard, so it is possible to use them in the water without further measures. Furthermore, the electric motor/generator 27 in the drive unit 11 may be preheated before operation, to prevent any possible condensation inside the drive unit 11. The outside of the drive unit 11 may be made from (polished) aluminium, greatly improving the corrosion resistance, and hence the flow resistance.

In Fig. 4 a partial detail view is shown of the attachment of the motor/generator assembly 10 to the hull 3, 4 of a catamaran. A hull plate 18 has generally a rounded shape, and an inner support 19 is provided on the inside of the hull 3, 4. On the outside of the hull plate 18, a swing support 17 is provided, which can be mounted to the inner support 19 using e.g. bolts. Also, the mounting element 16 are visible, which mount the attachment arm 13 to a rotary actuator 15, and allows a rotary movement of the motor/generator assembly 10 of more than 90°, e.g. over 110°.

Using the present embodiment of the motor/generator assembly 10 and the attachment structure as shown in Fig. 3 and 4, there is no need for a shaft penetrating the hull 3, 4 of the catamaran 1, or other complex and resistance causing attachment structures. This further enhances the low resistance and efficiency of the entire vessel 1.

The efficiency of the motor/generator assembly 10 is furthermore improved by using a streamlined type of attachment arm 13, e.g. using an aerofoil profile to minimize flow resistance in the extended position A. In this embodiment, a large three-bladed propeller 12 is used, which is of a slow rotating type and light weight, which further increases the efficiency of the motor/generator assembly 10. To further increase the efficiency of the propeller 12, a ring may be provided at the circumference of the propeller 12, which then acts as a jet fan.

The drive unit 11 (with attached propeller 12) is attached to one side of the attachment arm 13 using mounting elements 31, e.g. using a straight plate attached to the drive unit 11, which is bolted in place in the attachment arm 13 as shown. At the opposite side of the attachment arm 13, further mounting elements 16 are provided allowing mounting the motor/generator assembly 10 to the hull plate 18, e.g. using the swing support 17 and an actuator 15. The rotary actuator 15 is provided in the swing support 17, which allows moving the entire motor/generator assembly 10 between the extended position A and retracted position B. The rotary actuator 15 may be of a hydraulic type, or of an electrical type and in case of emergence can also be lifted manually with a hand pump.

In Fig. 5, a simplified diagrammatic view is shown of elements of the present invention playing a role in improving the energy efficiency of a modem sailing vessel 1. The drive unit 11 is connected to a motor/generator electronics unit 20 (e.g. using a cable 14 (see Fig. 3) running through the attachment arm 13). This unit 20 is coupled to a battery 26 (or other storage for electrical power, such as accumulators or storage capacitors), and controls the flow of electrical energy from or to an electric motor 27 in the drive unit 11 (either charging the battery 26, or depleting the battery 26). This allows using the motor/generator assembly 10 to provide thrust in one instance, and to provide electrical energy in another instance (e.g. when sailing, i.e. a part of the wind energy from the sails will be transferred to charge the battery 26).

The motor/generator electronics unit 20 comprises electrical circuits for controlling and converting energy, i.e. using high power semiconductor elements. In the process of control and conversion, heat is generated in the electronics unit 20, which in conventional circumstances is passed to the environment, e.g. using cooling ribs and circulating air. However, in the present invention embodiments, the heat generated by the electronics unit 20 is saved, using heat exchangers 21, 22 and associated fluid channels 23, 24 (e.g. water in pipes or tubing). This allows to transfer energy (heat) from the electronics unit 20 to other onboard systems in the sailing vessel 1, e.g. a warm water supply 25. The warm water supply 25 may e.g. use a boiler to store the heated water. As the heat is transferred to the warm water supply 25, the return channel 24 transports cooled water (or another suitable fluid) which allows cooling of the electronics unit 20. In turn, this increases the efficiency and life time of the electronics unit 20.

In a further embodiment, the motor/generator electronics unit 20 is also used to supply power to an onboard electrical heating system (for space heating or water heating). The heating system may then be adapted to operate on e.g. a 120 VDC power supply incorporated in the electronics unit 20, which is easier and more efficiently than running the heating system on 110 or 220 VAC (which requires first a conversion to 12VDC and then to 110 or 220 VAC using an inverter).

The motor/generator electronic unit 20 is furthermore arranged to control the operation of the electric motor 27 of the drive unit 11. Several modes of operation are possible:
- The drive unit 11 may be preset at an rpm setting, either using the drive unit 11 I or the sails to thrust the vessel 1. When the speed of the vessel 1 picks up (because of waves, increased wind force, etc.), and consequently the electric motor 27 exceeds a preset rotational speed, the operation of the drive unit 11 is automatically changed to a power generating mode to charge the battery 26.
- Maximum and minimum rpm settings can be preset, e.g. to use the least possible amount of energy or to charge the battery 26 most efficiently. When charging normally starts at 120 rpm of the electric motor 27 of the drive unit 11, and below that setting, no efficient generation of electrical power is possible. The maximum rpm setting may be related to the maximum hull speed. E.g., when the hull speed is nine knots, and the associated drive unit 11 must be run at 900 rpm to reach that speed, the maximum rpm setting may be set at 950 rpm. Driving the electrical motor 27 of the drive unit 11 beyond 950 rpm is not efficient, as the additional consumption of electrical energy is not transferred in an equal increase in speed (e.g. at 1100 rpm, only 0.2 knots additional speed is obtained, but at 30% higher power consumption).
- Safety modes may be included for the case of a stuck propeller 12, overheating of the electric motor 27 of the drive unit 11, etc. When overheating occurs, the electronics unit 20 lowers the drive rpm, and eventually stops the electric motor 27 of the drive unit 11.

The electronics unit 20 is connected to other onboard systems 28 in a further embodiment, e.g. using RS232 or USB connections. Other onboard systems 28 include, but are not limited to, radar system, (GPS) navigation system, etc. Also monitoring equipment may be interfaced with the electronics unit 20, e.g. for monitoring temperature of the drive unit 11, temperature associated electronics, motor rpm, torque, electrical consumption, etc. When e.g. overheating occurs, appropriate measures can be taken (e.g. shutting down or transition to lower load operation). When desired, an optional generator 7 (see Fig. 1) may be installed in the vessel 1, to provide additional electric capacity for onboard systems, or for back-up purposes. The optional generator 7 is mounted sound proof, to avoid sound or vibration nuisance to the people on board.

Using the motor/generator assembly 10 in the embodiments of the present invention allows operating a sail vessel 1 in a very efficient and environmentally friendly manner. When using the assembly 10 for propelling the vessel 1, the fuel consumption is much less than with conventional diesel or diesel-electric propulsion. The weight of the assemblies 10 is also lower than comparable conventional propulsion systems. When using the assembly 10 for electric propulsion of the vessel 1, there is no exhaust smell, smoke, noise, vibration, as in conventional systems, and it is also not necessary to fill diesel or petrol tanks in each port. Furthermore, the cost of maintenance, fuel, and downtime are considerable less compared with conventional propulsion systems. Space normally occupied on a vessel 1 for the conventional propulsion system, may now be used for other purposes (storage space, additional buoyancy, etc.).

## Claims

1. Vessel comprising a motor/generator assembly (10), the motor/generator assembly (10) comprising a drive unit (11) and a propeller (12) attached to the drive unit (11) for providing propulsion to the vessel (1) or for generating electric power,
in which the assembly (10) further comprises an attachment arm (13), the drive unit (11) and propeller (12) being attached to one end of the attachment arm (13), and an other end of the attachment arm (13) being attached to the vessel (1) by means of an actuator (15), **characterized in that**
the propeller (12) is directly attached to the drive unit (11), the drive unit (11) comprising an electric motor/generator (27),
the combination of drive unit (11) and propeller (12) is positioned external of a hull (3, 4) of the vessel (1) , and **in that**
the actuator (15) comprises a swiveling actuator (15) mounted above a water level of the vessel (1).

2. Vessel comprising a motor/generator assembly (10), the motor/generator assembly (10) comprising a drive unit (11) and a propeller (12) attached to the drive unit (11) for providing propulsion to the vessel (1) or for generating electric power,
in which the assembly (10) further comprises an attachment arm (13), the drive unit (11) and propeller (12) being attached to one end of the attachment arm (13), and an other end of the attachment arm (13) being attached to the vessel (1) by means of an actuator (15), **characterized in that**
the propeller (12) is directly attached to the drive unit (11), the drive unit (11) comprising an electric motor/generator (27),
the combination of drive unit (11) and propeller (12) is positioned external of a hull (3. 4) of the vessel (1), and **in that**
the actuator (15) comprises a linear actuator mounted in a hull of the vessel (1).

3. Vessel according to any one of the claims 1-2, in which the attachment arm (13) has a streamlined shape.

4. Vessel according to any one of claims 1-3, in which the drive unit (11) has a streamlined profile.

5. Vessel according to any one of the claims 1-4, in which the vessel (1) comprises two hulls (3,4), both provided with a motor/generator assembly (10).

6. Vessel according to claim 5, in which the propellers (12) of the two motor/generator assemblies (10) are counter rotating.

7. Vessel according to any one of claims 1-6, further comprising a motor/generator electronics unit (20) for controlling operation of the drive unit (11) and for converting electric energy,
in which the motor/generator electronics unit (20) further comprises a heat exchanger (21, 22) for transporting heat energy from the motor/generator electronics unit (20) to further onboard systems (25).

8. Vessel according to claim 7, in which the motor/generator electronic unit (20) is further arranged to switch to a power generating mode when the electric motor (27) exceeds a preset rotation speed.

9. Vessel according to claim 8, in which the motor/generator electronics unit (20) is further arranged to be in a propelling mode up to a maximum speed of the electric motor (27).

## Patentansprüche

1. Schiff, umfassend eine Motor-/Generatoranordnung (10), wobei die Motor-/ Generatoranordnung (10) eine Antriebseinheit (11) und einen Propeller (12), der an der Antriebseinheit (11) befestigt ist, um einen Antrieb für das Schiff (1) bereitzustellen oder um elektrische Energie zu erzeugen, umfasst, bei welcher die Anordnung (10) weiter einen Befestigungsarm (13) umfasst, wobei die Antriebseinheit (11) und der Propeller (12) an einem Ende des Befestigungsarms (13) befestigt sind und ein anderes Ende des Befestigungsarms (13) mittels einer Stelleinheit (15) an dem Schiff (1) befestigt ist, **dadurch gekennzeichnet, dass**
der Propeller (12) direkt an der Antriebseinheit (11) befestigt ist, wobei die Antriebseinheit (11) einen Elektromotor/Generator (27) umfasst,
die Anordnung von Antriebseinheit (11) und Propeller (12) außerhalb des Schiffskörpers (3, 4) des Schiffs (1) angeordnet ist und dass
die Stelleinheit (15) eine schwenkbare Stelleinheit (15) umfasst, die oberhalb eines Wasserstands des Schiffs (1) befestigt ist.

2. Schiff, umfassend eine Motor-/Generatoranordnung (10), wobei die Motor-/ Generatoranordnung (10) eine Antriebseinheit (11) und einen Propeller (12), der an der Antriebseinheit (11) befestigt ist, um einen Antrieb für das Schiff (1) bereitzustellen oder um elektrische Energie zu erzeugen, umfasst, bei welcher die Anordnung (10) weiter einen Befestigungsarm (13) umfasst, wobei die Antriebseinheit (11) und der Propeller (12) an einem Ende des Befestigungsarms (13) befestigt sind und ein anderes Ende des Befestigungsarms (13) mittels einer Stelleinheit (15) an dem Schiff (1) befestigt ist, **dadurch gekennzeichnet, dass**
der Propeller (12) direkt an der Antriebseinheit (11) befestigt ist, wobei die Antriebseinheit (11) einen Elektromotor/Generator (27) umfasst,
die Anordnung von Antriebseinheit (11) und Propeller (12) außerhalb des Schiffskörpers (3, 4) des Schiffs (1) angeordnet ist und dass
die Stelleinheit (15) eine lineare Stelleinheit umfasst, die in einem Bootsköper des Schiffes (1) befestigt ist.

3. Schiff nach einem der Ansprüche 1 und 2, bei welchem der Befestigungsarm (13) ein stromlinienförmiges Profil aufweist.

4. Schiff nach einem der Ansprüche 1 bis 3, bei welchem die Antriebseinheit (11) ein stromlinienförmiges Profil aufweist.

5. Schiff nach einem der Ansprüche 1 bis 4, bei welchem das Schiff (1) zwei Schiffskörper (3, 4) umfasst, wobei beide mit einer Motor-/Generatoranordnung (10) versehen sind.

6. Schiff nach Anspruch 5, bei welchem die Propeller (12) der beiden Motor-/ Generatoranordnungen (10) gegenläufig sind.

7. Schiff nach einem der Ansprüche 1 bis 6, ferner umfassend eine Motor-/ Generatorelektronikeinheit (20) zum Steuern des Betriebs der Antriebseinheit (11) und zum Umwandeln von elektrischer Energie,
bei welchem die Motor-/Generatorelektronikeinheit (20) ferner einen Wärmetauscher (21, 22) umfasst, um Wärmeenergie von der Motor-/Generatorelektronikeinheit (20) zu weiteren Bordsystemen (25) zu transportieren.

8. Schiff nach Anspruch 7, bei welchem die Motor-/Generatorelektronikeinheit (20) ferner ausgelegt ist, in einen Energieerzeugungsmodus zu schalten, wenn der elektrische Motor (27) eine vorgegebene Drehzahl überschreitet.

9. Schiff nach Anspruch 8, bei welchem die Motor-/Generatorelektronikeinheit (20) ferner ausgelegt ist, bis zu einer maximalen Drehzahl des Elektromotors (27) in einem Antriebsmodus zu sein.

## Revendications

1. Navire comprenant un ensemble moteur/générateur (10), l'ensemble moteur/générateur (10) comprenant une unité d'entraînement (11) et une hélice (12) fixée à l'unité d'entraînement (11) pour fournir une propulsion au navire (1) ou pour générer de l'énergie électrique, dans lequel l'ensemble (10) comprend en outre un bras de fixation (13), l'unité d'entraînement (11) et l'hélice (12) étant fixées à une extrémité du bras de fixation (13), et une autre extrémité du bras de fixation (13) étant fixée au navire (1) au moyen d'un actionneur (15), **caractérisé en ce que** l'hélice (12) est directement fixée à l'unité d'entraînement (11), l'unité d'entraînement (11) comprenant un moteur/générateur électrique (27),
l'association de l'unité d'entraînement (11) et de l'hélice (12) est positionnée de façon externe à une coque (3, 4) du navire (1), et **en ce que**
l'actionneur (15) comprend un actionneur pivotant (15) monté au-dessus d'un niveau d'eau du navire (1),

2. Navire comprenant un ensemble moteur/générateur (10), l'ensemble moteur/générateur (10) comprenant une unité d'entraînement (11) et une hélice (12) fixée à l'unité d'entraînement (11) pour fournir une propulsion au navire (1) ou pour générer de l'énergie électrique, dans lequel l'ensemble (10) comprend en outre un bras de fixation (13), l'unité d'entraînement (11) et l'hélice (12) étant fixées à une extrémité du bras de fixation (13), et une autre extrémité du bras de fixation (13) étant fixée au navire (1) au moyen d'un actionneur (15), **caractérisé en ce que** l'hélice (12) est directement fixée à l'unité d'entraînement (11), l'unité d'entraînement (11) comprenant un moteur/générateur électrique (27),
l'association de l'unité d'entraînement (11) et de l'hélice (12) est positionnée de façon externe à une coque (3, 4) du navire (1), et **en ce que**
l'actionneur (15) comprend un actionneur linéaire monté dans une coque du navire (1).

3. Navire selon une quelconque des revendications 1 à 2, dans lequel le bras de fixation (13) possède une forme carénée.

4. Navire selon une quelconque des revendications 1 à 3, dans lequel l'unité d'entraînement (11) possède un profil caréné.

5. Navire selon une quelconque des revendications 1 à 4, dans lequel le navire (1) comprend deux coques (3, 4), les deux pourvues d'un ensemble moteur/générateur (10).

6. Navire selon la revendication 5, dans lequel les hélices (12) des deux ensembles moteur/générateur (10) sont contrarotatives.

7. Navire selon une quelconque des revendications 1 à 6, comprenant en outre une unité électronique de moteur/générateur (20) pour commander le fonctionnement de l'unité d'entraînement (11) et pour convertir de l'énergie électrique,
dans lequel l'unité électronique de moteur/générateur (20) comprend en outre un échangeur thermique (21, 22) pour transporter de l'énergie thermique de l'unité électronique de moteur/générateur (20) à des systèmes à bord supplémentaires (25).

8. Navire selon la revendication 7, dans lequel l'unité électronique de moteur/générateur (20) est en outre agencée pour passer à un mode de génération d'énergie électrique lorsque le moteur électrique (27) dépasse une vitesse de rotation prédéterminée.

9. Navire selon la revendication 8, dans lequel l'unité électronique de moteur/générateur (20) est en outre agencée pour être dans un mode de propulsion jusqu'à une vitesse maximum du moteur électrique (27).
